Europäisches Patentamt

European Patent Office

Office européen des brevets

(11) Veröffentlichungsnummer: **0 490 344 A1**

## (12) EUROPÄISCHE PATENTANMELDUNG

(21) Anmeldenummer: **91121176.1**

(22) Anmeldetag: **10.12.91**

(51) Int. Cl.⁵: **G01D 1/00**

(30) Priorität: **11.12.90 DE 4039528**

(43) Veröffentlichungstag der Anmeldung:
**17.06.92 Patentblatt 92/25**

(84) Benannte Vertragsstaaten:
**AT CH DE FR IT LI**

(71) Anmelder: **Feustel, Gerd**
**Rosskopfstrasse 2a**
**W-8022 Grünwald(DE)**

(72) Erfinder: **Feustel, Gerd**
**Rosskopfstrasse 2a**
**W-8022 Grünwald(DE)**

(74) Vertreter: **Heim, Hans-Karl, Dipl.-Ing.**
**c/o Weber & Heim Hofbrunnstrasse 36**
**W-8000 München 71(DE)**

(54) Anordnung zur Erfassung von Grundwasserständen.

(57) Die Erfindung betrifft eine autark arbeitende, miniaturisierte und in ein handelsübliches Pegelstandsmeßgerät einbaubare Anordnung, mit der subjektive Fehler während der Erfassung der Meßdaten nahezu ausgeschlossen werden. Die Anordnung weist eine mikroelektronische Recheneinheit auf, die eingangsseitig mit einem Meßwertaufnehmer und ausgangsseitig mit einem Datenspeicher verbunden ist. Die mikroelektronische Recheneinheit wird von einem Zeitplangeber gesteuert, so daß in festgelegten Zeitabständen Meßsignale vom Meßwertaufnehmer aufgenommen und in den Datenspeicher abgelegt werden. Über eine Steckverbindung ist zu wählbaren Zeitpunkten eine Datenübertragung an ein externes elektronisches Datenverarbeitungsgerät zwecks Aufbereitung der Daten möglich. Es ist eine eigene Stromversorgung vorhanden.

Fig. 1

Die Erfindung betrifft eine Anordnung zur Erfassung von Grundwasserständen, insbesondere im Tief- und Wasserbau.

Es ist bei Baustellen, die in das Grundwasser einbinden, üblich, im Bereich der Baugruben Kontrollpegel zu errichten, um die Grundwasserstände in festgelegten Abständen abzulesen, aufzuzeichnen und beispielsweise als Kurve in Abhängigkeit von der Zeit darzustellen. Zur Messung werden Lichtlote oder Druckaufnehmer verwendet.

Nachteile dieser Meßwerterfassung und -auswertung sind subjektiv bedingte Meßfehler und Ungenauigkeiten infolge unzureichender Sorgfalt beim Ablesen, Übertragen und Auswerten der Meßdaten. Außerdem ist die Überwachung großer, grundwassergefährdeter Baustellen, bei denen mehrere Meßstellen eingerichtet werden müssen, mit einem relativ hohen personellen Aufwand verbunden.

Der Erfindung liegt die **Aufgabe** zugrunde, eine in ein Pegelstandsmeßgerät einbaubare und autark arbeitende, miniaturisierte Anordnung zu schaffen, bei der subjektive Fehler während der Erfassung der Meßdaten nahezu ausgeschlossen sind.

Erfindungsgemäß wird die Aufgabe durch die kennzeichnenden Merkmale des Anspruchs 1 gelöst.

Zweckmäßige und vorteilhafte Ausgestaltungen sind in den Unteransprüchen und in den Ausführungsbeispielen beschrieben.

Grundgedanke der Erfindung ist, durch eine miniaturisierte Anordnung, die im Meßgerät installiert werden kann, eine Erfassung der Meßdaten vorzunehmen, um diese zu einer späteren, in frei wählbaren Zeitabständen durchführbaren Datenübertragung an eine externe elektronische Datenverarbeitungsarbeit übergeben zu können.

Erfindungsgemäß besteht die Anordnung aus einer mikroelektronischen Recheneinheit, die eingangsseitig mit einem Meßwertaufnehmer und ausgangsseitig mit einem Datenspeicher verbunden ist, wobei die mikroelektronische Recheneinheit von einem Zeitplangeber steuerbar ist, um in festlegbaren Zeitabständen Signale vom Meßwertaufnehmer aufzunehmen und in einen Datenspeicher abzulegen. Die erfindungsgemäße Anordnung weist eine Steckverbindung auf, über die der leitungsmäßige Anschluß an externe elektronische Datenverarbeitungsgeräte möglich ist. Vorzugsweise kann die Anordnung mit einem Handterminal, wie einem Laptop, verbunden werden, so daß eine Datenübertragung vom Datenspeicher der erfindungsgemäßen Anordnung in den Speicher des Laptops möglich ist.

Es ist vorteilhaft, als Datenspeicher einen nicht flüchtigen, löschbaren Datenspeicher, insbesondere einen Halbleiterspeicher einzusetzen. Bei Verwendung eines magnetomotorischen Speichers besteht ebenso die Möglichkeit, diese Speichereinheit, die beispielsweise auf die Leiterplatte der erfindungsgemäßen Anordnung aufgesteckt ist, zu entnehmen und durch eine andere Speichereinheit zu ersetzen.

Durch diese Datenübertragung, die frei von jeder manuellen Eingabe ist, werden Übertragungsfehler und Ungenauigkeiten ausgeschlossen.

Erfindungsgemäß ist in der Anordnung eine netzunabhängige Stromversorgung für die elektronischen Bauelemente vorhanden, vorzugsweise ist dies ein Batteriesatz. Damit arbeitet die Anordnung völlig autark, da jegliche Verkabelung entfällt. Ein weiterer Vorteil ist, daß eine mit der erfindungsgemäßen Anordnung ausgestattete Meßstation nur zur Datenübertragung aufgesucht werden muß, während die Meßstation ansonsten nahezu ohne Wartung und Überwachung arbeitet. In diesem Falle ist es vorteilhaft, die Ladekapazität der Stromversorgung, beispielsweise des Batteriesatzes, kontrollfähig zu gestalten.

Besonders vorteilhaft ist es, wenn die Kontrolle der Ladekapazität in die Erfassung der Meßsignale integriert ist. Eine weitere Möglichkeit besteht darin, den Batteriesatz mit einer Alarmvorrichtung auszustatten, so daß gesichert ist, daß jederzeit eine ausreichende Ladekapazität vorhanden ist.

Bei Verwendung eines Meßwertaufnehmers, der analoge Meßsignale liefert, ist es erforderlich, einen Analog/Digital-Umsetzer in die Anordnung zu installieren, der die Meßsignale in digitalisierter Form an die mikroelektronische Recheneinheit überträgt. Diese Recheneinheit kann ein Mikroprozessor sein oder aber ein fest oder frei programmierbarer Mikrocomputer. Wesentlich ist die Möglichkeit, in frei gewählten, vorgegebenen Zeiten das Meßsignal dem Meßwertumformer bzw. dem Analog/Digital-Umsetzer zu entnehmen und in den Datenspeicher abzulegen. Dieses Abgreifen der Meßsignale vom Meßwertumformer durch die mikroelektronische Recheneinheit wird von einem Zeitplangeber gesteuert, so daß die Zeitabstände festgelegt werden können. Beispielsweise ist es möglich, den Meßsignalabgriff als Intervallzeit einzustellen.

Es ist vorteilhaft, daß bei Verwendung eines Mikroprozessors oder fest oder frei programmierbaren Mikrocomputers eine Alarmzeit eingestellt werden kann. Diese Alarmzeit ist über eine Programmierung vorgebbar, bei der durch Aufbereitung der Meßdaten eine neue Alarmzeit berechnet wird. Durch eine derartige Programmierung ist die Selbststeuerung der Zeitabstände des Meßwertabgriffs möglich.

Durch die Verwendung mikroelektronischer Bauelemente weist die erfindungsgemäße Anordnung vorteilhafterweise äußerst geringe Abmessungen auf, so daß ein Einbau in die gebräuchlichen Kontroll- oder Beobachtungs-Einrichtungen für Grundwasserpegel ohne weitere Um oder Aufbauten möglich ist. Vorteilhaft ist, daß damit gleichzeitig ein optimaler Schutz der Anordnung gewährleistet ist.

Weitere Vorteile der erfindungsgemäßen Anordnung sind die unaufwendige Herstellung und einfache und sichere Handhabung, wodurch ihre Verwendung zur Überwachung großer und grundwassergefährdeter Baustellen, bei denen eine Vielzahl von Meßstationen eingerichtet werden muß, mit relativ geringen Kosten möglich ist.

In einer Weiterbildung der Erfindung ist die Anordnung mit einer Schnittstelle versehen, so daß die Anordnung als Datenendgerät an einen Zentralrechner angeschlossen werden kann. Als Zentralrechner kann beispielsweise ein Personal-Computer verwendet werden, als Übertragungskabel sind vorteilhafterweise Lichtleiterkabel einzusetzen. Bei einer derartigen Verkabelung mehrerer Anordnungen können die Meßsignale vorteilhafterweise kontinuierlich abgefragt und mittels handelsüblicher oder individueller Programme aufbereitet und ausgegeben werden. Ein besonderes Programm ermöglicht es, jeder Anordnung eine eigene, fest vorgegebene Kennung einzugeben und zusätzlich eine Standortdefinition zuzuordnen. Das Programm übernimmt die gemessenen Werte einschließlich Datum und Uhrzeit und ordnet diese entsprechend ein. Damit ist sichergestellt, daß beim Datentransfer die richtige Adresse angesprochen wird und Verwechslungen ausgeschlossen sind.

Die Aufbereitung der Meßdaten kann als endlos ausgedruckte Ganglinien erfolgen, wobei auch mehrere Ganglinien übereinandergelegt werden können. Es ist möglich, dreidimensionale Grafiken zu erstellen, insbesondere bei mehreren, flächig angeordneten Anordnungen. Außerdem besteht die Möglichkeit, die Meßdaten in einer Datenbank zu speichern und diese, nach bestimmten Gesichtspunkten geordnet, auszudrucken.

Neben den vielfältigen Aufbereitungsmöglichkeiten, die eine Verkabelung bietet, ergibt sich dadurch ein Minimum an Zeitaufwand und gleichzeitig ein Höchstmaß an Sicherheit und Zuverlässigkeit bei der Erfassung von Grundwasserständen.

Die Erfindung wird nachstehend anhand einer Zeichnung beschrieben. In dieser zeigen:

Fig. 1     ein Blockschaltbild der erfindungsgemäßen Anordnung und

Fig. 2     einen Ablaufplan bei Anschluß eines Handterminals an die erfindungsgemäße Anordnung.

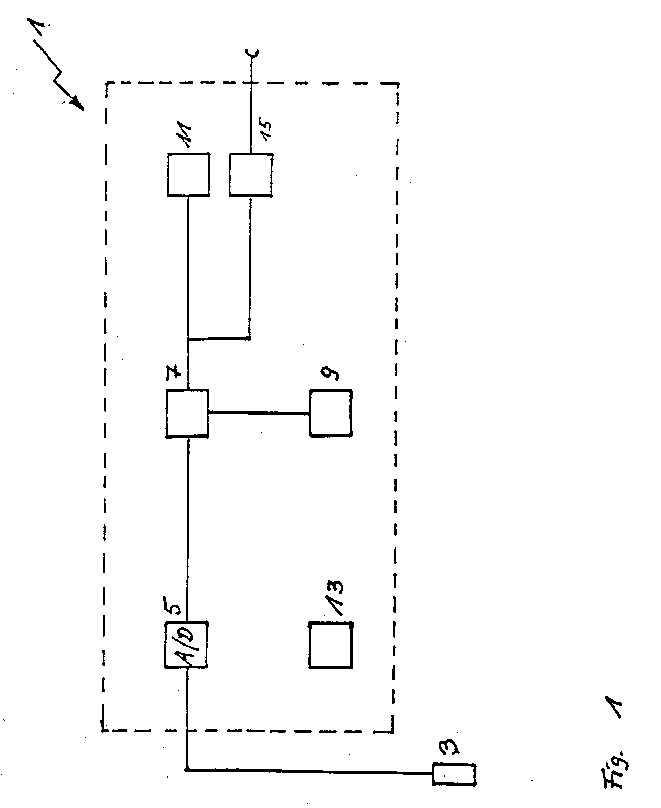

In Fig. 1 ist die erfindungsgemäße Anordnung 1 zur Erfassung von Grundwasserständen dargestellt. Als Meßwertaufnehmer 3 ist eine Meßsonde in einer Meßstation im Bereich einer durch Grundwasser gefährdeten Baugrube installiert, durch die die Höhe des Grundwasserspiegels gemessen wird. Der Meßwert des analogen Signals wird in einem Analog/Digital-Umsetzer 5 zu einem binären Zahlencode umgewandelt, der von einer mikroelektronischen Recheneinheit 7, beispielsweise einem Meßrechner, von einem Zeitplangeber 9 gesteuert, zu den frei gewählten, vorgegebenen Zeitpunkten aufgenommen und in einem nicht flüchtigen Datenspeicher 11 abgelegt wird. A/D-Umsetzer 5, mikroelektronische Recheneinheit 7, eine Echtzeituhr als Zeitplangeber 9 und der Datenspeicher 11 sind auf einer Leiterplatte in einem elektrisch isolierten und wasserdichten Gehäuse angeordnet. Außerdem ist als netzunabhängige Stromversorgung 13 ein Batteriesatz installiert. Ein Netzanschluß ist somit nicht erforderlich, die Anordnung arbeitet autark. Die Meßstation muß lediglich zum Herunterladen der Meßdaten aus dem Datenspeicher 11 aufgesucht werden. Zu diesem Zweck weist die erfindungsgemäße Anordnung eine Steckverbindung 15 auf, über die die Meßdaten jederzeit entnommen, beispielsweise in einen Laptop übertragen werden können. Dabei können die Werte entweder nur übertragen werden oder aber gelöscht werden, um Speicherkapazität freizuhalten.

Es ist möglich, einen frei programmierbaren Mikrocomputer oder aber einen Mikrocomputer mit Festprogrammierung, z.B. einen ROM, PROM oder EPROM, einzusetzen.

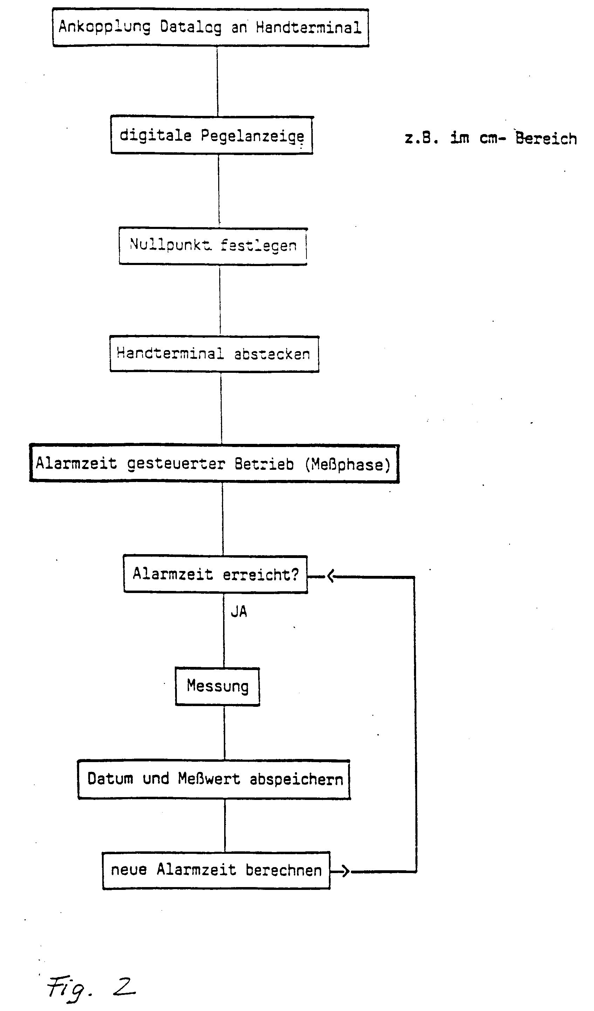

In Fig. 2 ist ein Ablaufplan bei Anschluß eines Handterminals, beispielsweise eines Laptops, an die erfindungsgemäße Anordnung dargestellt. Die erfindungsgemäße Anordnung wird hier kurz mit "Datalog", abgeleitet aus Datenlogger, bezeichnet. Nach Ankoppelung des Handterminals über die Steckverbindung der erfindungsgemäßen Anordnung erfolgen die Datenübertragung und die digitale Pegelanzeige. Über ein spezielles Programm ist es möglich, jeder Meßstation eine eigene Kennung einzugeben und zusätzlich eine Standortdefinition zuzuordnen.

Mit einem Zusatzgerät ist es möglich, die Sonden exakt zu justieren, um einen Bezug zu einer vorgegebenen Höhe herzustellen, beispielsweise auf Normalnull. Das Programm kann außerdem die Kontrolle der Ladekapazität des Batteriesatzes und die Korrektur der Standortdefinition steuern.

Die Meßwerte können jeweils nach einer vorgegebenen Meßzeit, die auch als Alarmzeit bezeichnet wird, selbsttätig abgefragt werden. Dadurch entsteht ein von der Alarmzeit gesteuerter Betrieb, wodurch eine besonders effektive Überwachung der Pegelstände erreicht wird.

Vorteile der erfindungsgemäßen Anordnung bestehen in der völlig autarken Betriebsweise und der Möglichkeit, die erfaßten und gespeicherten Daten in bestimmten Zeitabständen mit einem externen Rechner abzufragen, beispielsweise mit einem Laptop und dabei die Löschung der Daten in der Anordnung vorzunehmen, um Speicherplatz für neue Daten zu erhalten. Die in beispielsweise einen Laptop übertragenen Meßdaten der einzelnen Anordnungen können dann von den Meßstationen entfernt aufbereitet und ausgewertet werden. Wenn die einzelnen Meßstationen nicht zu weit auseinander liegen, ist es möglich, diese mit einem Zentralrechner, beispielsweise einem Personal-Computer mittels Kabel zu verbinden. Die Daten können dann laufend übernommen werden und menügesteuert aufbereitet werden.

Beispielsweise kann das Hauptauswahlmenü nach dem Programmstart folgende Untermenüs anbieten: Messdaten verarbeiten, Uhrzeit/Datum, Sonstiges, Programmende.

Im Untermenü "Meßdaten verarbeiten" kann zur Auswahl bereitstehen: Datalog auslesen, Daten im PC speichern, grafische Darstellung, Daten ausdrucken.

Außerdem kann vom Programm vorgesehen sein, die Meßdaten in eine Datenbank einzulesen und diese dann ebenfalls nach bestimmten Gesichtspunkten auszudrucken. Letztendlich kann das Programm die Löschung der Daten im Datalog vorsehen.

Im Untermenü "Uhrzeit/Datum" können die frei wählbaren Zeiten angeboten werden, außerdem der Datenabgriff in Alarmzeit oder aber in Intervallzeit vorgesehen sein.

Im Untermenü "Sonstiges" ist beispielsweise wählbar die Kontrolle der Batteriekapazität. Diese Kontrolle kann außerdem eine vorausschauende Kapazitätsangabe enthalten. In diesem Untermenü kann außerdem die Datalog-Kennung, d.h. also die Standortdefinition der einzelnen Meßstationen mit erfindungsgemäßer Anordnung, enthalten sein. Außerdem kann in diesem Untermenü die Initialisierung, die Systemgrundeinstellung, wählbar sein.

**Patentansprüche**

1. Anordnung zur Erfassung von Grundwasserständen,
   dadurch **gekennzeichnet**,
   daß eine mikroelektronische Recheneinheit (7) vorgesehen ist,
   daß die mikroelektronische Recheneinheit eingangsseitig mit einem Meßwertaufnehmer (3) und ausgangsseitig mit einem Datenspeicher (11) verbunden ist,
   daß die mikroelektronische Recheneinheit (7) von einem Zeitplangeber (9) steuerbar ist, so daß in festlegbaren Zeitabständen Meßsignale vom Meßwertaufnehmer (3) aufnehmbar und im Datenspeicher (11) ablegbar sind,
   daß die Recheneinheit (7) mit einer Steckverbindung (15) versehen ist, mit der eine leitungsgebundene Datenübertragung vom Datenspeicher (11) an eine externe elektronische Datenverarbeitungseinheit zu wählbaren Zeitpunkten durchführbar ist, und
   daß eine netzunabhängige Stromversorgung (13) vorhanden ist.

2. Anordnung nach Anspruch 1,
   dadurch **gekennzeichnet**,
   daß die mikroelektronische Recheneinheit (7) über einen Analog/Digital-Umsetzer (5) mit einer Meßsonde als Meßwertaufnehmer (3) verbunden ist.

3. Anordnung nach Anspruch 1 und 2,
   dadurch **gekennzeichnet**,
   daß ein Mikroprozessor als Recheneinheit (7) eingesetzt ist.

4. Anordnung nach einem der vorhergehenden Ansprüche,
   dadurch **gekennzeichnet**,
   daß als Recheneinheit und Datenspeicher (7,11) ein fest oder frei programmierbarer Mikrocomputer eingesetzt ist.

5. Anordnung nach einem der Ansprüche 1 bis 3,
   dadurch **gekennzeichnet**,
   daß ein nicht flüchtiger, löschbarer Datenspeicher (11), insbesondere ein Halbleiterspeicher eingesetzt ist.

6. Anordnung nach einem der vorhergehenden Ansprüche,
   dadurch **gekennzeichnet**,
   daß über die Steckverbindung (13) ein Handterminal am Meßort zur Aufbereitung der Meßdaten anschließbar ist.

7. Anordnung nach Anspruch 7,
   dadurch **gekennzeichnet**,
   daß die Datenaufbereitung die Neufestlegung der vom Zeitplangeber (9) gesteuerten Zeitabstände umfaßt.

8. Verwendung der Anordnung nach Anspruch 1 als Datenendgerät für eine mit einer zentralen Recheneinheit arbeitenden Baustellenüberwachung, wobei jeder Anordnung eine Standortkennung zugeordnet ist.

Fig. 1

Ankopplung Datalog an Handterminal

digitale Pegelanzeige                    z.B. im cm- Bereich

Nullpunkt festlegen

Handterminal abstecken

Alarmzeit gesteuerter Betrieb (Meßphase)

Alarmzeit erreicht? ─<──────────

JA

Messung

Datum und Meßwert abspeichern

neue Alarmzeit berechnen ─>───────

Fig. 2

6

Europäisches
Patentamt

**EUROPÄISCHER RECHERCHENBERICHT**

Nummer der Anmeldung

EP    91 12 1176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN<br>vol. 013, no. 306 (P-897)13. Juli 1989<br>& JP-A-01 080 811 ( YOSHINOBU TOSHI ) 27. März 1989<br>* Zusammenfassung *<br>--- | 1-7 | G01D1/00 |
| Y | EP-A-0 347 632 (REGELTRON COMPUTER GMBH)<br>* Seite 1, Zeile 42 - Zeile 55; Anspruch 1 *<br>--- | 1-7 | |
| A | DE-A-3 217 799 (H.J. HÜBNER)<br>* Seite 11, Zeile 24 - Zeile 25 *<br><br>----- | 8 | |
| | | | **RECHERCHIERTE SACHGEBIETE (Int. Cl.5)**<br><br>G01D<br>G01F |

Der vorliegende Recherchenbericht wurde für alle Patentansprüche erstellt

| Recherchenort | Abschlußdatum der Recherche | Prüfer |
|---|---|---|
| DEN HAAG | 03 MAERZ 1992 | LUT K. |